# DEMANDE DE BREVET EUROPEEN

(11) **EP 0 540 427 A1**
(43) Date de publication de la demande: **05.05.1993**
(21) Numéro de dépôt: 92402948.1
(22) Date de dépôt: 30.10.1992
(51) Int. Cl.: G06F 13/40

(54) **Circuit d'interface pour carte à circuit intégré**

(30) Priorité: 31.10.1991 FR 9113528
(71) Demandeur: GEMPLUS CARD INTERNATIONAL, F-13420 Gemenos (FR)
(72) Inventeur: Karlisch, Thierry, F-75116 Paris (FR); Kowalski, Jacek, F-75116 Paris (FR); Peyret, Patrice, F-75116 Paris (FR)
(74) Mandataire: Schmit, Christian Norbert Marie

(57) **Abrégé**

L'invention concerne les circuits d'interface pour lecteurs de carte à puce.

Elle consiste à prévoir des connexions de liaison entre ce circuit et le lecteur, identiques à celles entre le circuit et la carte à puce. Un commutateur (102) interne au circuit permet de relier ces connexions ensemble , ou vers une registre de contrôle (101) interne au circuit, sous la commande d'une connexion de commande (REGWR) supplémentaire.

Elle permet de limiter le nombre de connexions entre le circuit et le lecteur et de commander le circuit avec une interface logicielle identique à celle de commande d'une carte à puce.

## Description

La présente invention se rapporte aux circuits spécialisés qui permettent de réaliser une interface entre une carte à circuit intégré, connue aussi sous le nom de carte "à puce", et les circuits d'exploitation contenus dans le lecteur auquel on connecte la carte pour la faire fonctionner.

Les cartes à puce actuellement connues peuvent comporter des circuits intégrés très divers allant d'une simple mémoire (carte téléphonique) à un microprocesseur complet muni de ses mémoires RAM et ROM. Par contre leur interface physique est normalisée sur le nombre (normalement 8) et l'affectation des contacts avec l'extérieur, c'est-à-dire avec les différents lecteurs qui servent d'abord à programmer la carte pendant la fabrication et ensuite à la faire fonctionner en usage normal. Eventuellement certaines tensions, de programmation par exemple, peuvent différer selon la carte utilisée.

En outre, l'interface logicielle (ou protocole), c'est-à-dire la séquencement des signaux sur les contacts, est soit normalisée dans le cas des circuits asynchrones (norme ISO) soit non normalisée dans le cas des circuits synchrones.

Par exemple pour un circuit synchrone (généralement une mémoire seule sans microprocesseur) on dispose de connexions d'alimentation Vcc du circuit, de masse, de déclenchement (RST), et de trois connexions transmettant respectivement des signaux d'horloge (CLK), de données (I/O), et de conditionnement de la mémoire en écriture ou en lecture (R/W). On peut admettre par exemple en plus pour ce type de circuit synchrone que le décompte des impulsions d'horloge permet d'adresser les cellules mémoires successives de cette mémoire. Les protocoles non normalisés de gestion de ces circuits synchrones utilisent en particulier tous les quatre dernières connexions (RST, CLK, I/O, R/W) pour faire fonctionner la carte.

Les circuits contenus dans le lecteur forment un système informatique à base d'un ou plusieurs microprocesseurs et sont comparables à un micro-ordinateur de type courant. Pour assurer l'interface entre ce système informatique et la carte à puce, on utilise généralement des circuits intégrés spécialisés qui assurent essentiellement les fonctions suivantes :
- gestion du séquencement des tensions lors de l'alimentation de la carte à puce;
- protection contre les surtensions ou les court-circuits,
- gestion du séquencement des tensions lors du retrait de la carte du lecteur;
- génération des tensions régulées d'alimentation et de programmation (VCC et VPP);
- gestion des 8 contacts de la carte;
- interfaçage logiciel.

On citera notamment les circuits L 6603 et L 6604 de la société SGS THOMSON et MTC 6012 A et 6012 D de la société MIETEC. Les circuits spécialisés ont pour but de déterminer si les connexions d'horloge, de transmission de signaux de données, et de conditionnement en lecture ou écriture sont en court-circuit, ou même de déterminer si le courant dans la carte est trop élevé.

Il existe donc deux interfaces: une première interface entre ces circuits spécialisés et la carte à puce, et une deuxième interface entre ces circuits spécialisés et le système informatique du lecteur. Du côté carte à puce, l'interface est bien déterminée, du point de vue physique, mais du fait des deux types de cartes (synchrone et asynchrone) elle doit être double. Du côté du système informatique du lecteur l'interface est très variable selon le constructeur du circuit spécialisé. Cependant tous les circuits spécialisés comportent des registres d'état qui signalent les bons fonctionnements ou les défauts constatés. Ces registres d'états sont chargés d'autant de mots que de tests effectués. Pour connaître le fonctionnement d'une carte à puce il faut aller lire ces registres d'états.

Dans les circuits connus jusqu'à présent, l'interface entre le circuit spécialisé et le système informatique utilise un grand nombre de connexions qui permettent d'une part d'adresser à la carte les signaux nécessaires et d'autre part de gérer les différents registres internes du circuit qui servent à remplir les fonctions listées ci-dessus. On trouve donc souvent :
- 8 connexions, appelées généralement D0-D7 correspondant aux bits de données à inscrire dans ces registres;
- un certain nombre de connexions de contrôle (souvent 3) permettant de lire et d'écrire ces données dans les registres;
- une connexion pour chaque signal de la carte à puce que l'interface sait gérer (toutes ne sont pas toujours disponibles).

Outre la complexité matérielle provenant de ce grand nombre de fils (un par connexion), ceci nécessite une interface logicielle supplémentaire dans le système informatique pour gérer les relations avec le circuit spécialisé, alors que l'on dispose, quelle que soit la puce à gérer, déjà au moins de l'interface logicielle (synchrone ou asynchrone) carte/lecteur nécessaire pour gérer la carte ou le lecteur, et souvent des deux puisque l'interface logicielle avec les circuits asynchrones est normalisée, donc elle est bien connue, donc on peut en disposer sans informations supplémentaires relatives à la puce.

L'invention a pour but de réduire le nombre de connexions entre le système informatique du lecteur et le circuit spécialisé, de réduire en pratique le nombre de broches de connexion du circuit spécialisé, et de faire en sorte que le système informatique du lecteur n'ait plus à connaître que deux interfaces au lieu de trois. Dans ce but, l'interface entre le circuit spécialisé et le système informatique du lecteur est telle qu'elle imite complètement l'interface entre ce circuit spécialisé et une carte à puce du type synchrone (même nombre de connexions, même protocole). Dans ce cas on a toujours trois interfaces, une entre le système informatique et le circuit spécialisé et deux entre ce circuit spécialisé et les cartes à puce, mais la première interface est la même que l'une des deux dernières: elle correspond aux puces synchrones.

Pour diminuer cette complexité matérielle et supprimer cette interface logicielle supplémentaire, l'invention propose donc un circuit spécialisé d'interface pour carte à circuit intégré, comportant un premier ensemble de connexions destinées à être connectées à la carte, un deuxième ensemble de connexions destinées à être connectées à un système informatique d'un lecteur de carte, et un registre de contrôle destiné à contrôler le fonctionnement du circuit, principalement caractérisé en ce que le deuxième ensemble de connexions comprend un sous-ensemble de connexions identique au premier ensemble et une connexion de commande de commutation, et que le circuit comprend en outre des moyens de commutation permettant ou bien de relier les connexions du sous-ensemble respectivement à des connexions homologues du premier ensemble, ou bien de relier les connexion du sous-ensemble au registre de contrôle, sous l'action de la connexion de commande.

D'autres particularités et avantages de l'invention apparaîtront clairement dans la description suivante, faite en regard des figures annexées, qui représentent :
- la figure 1, un schéma simplifié d'un circuit d'interface selon l'invention, et
- la figure 2, un schéma simplifié de la gestion d'un registre de contrôle,
- la figure 3, un diagramme d'une séquence d'écriture dans le registre de contrôle d'un tel circuit spécialisé.

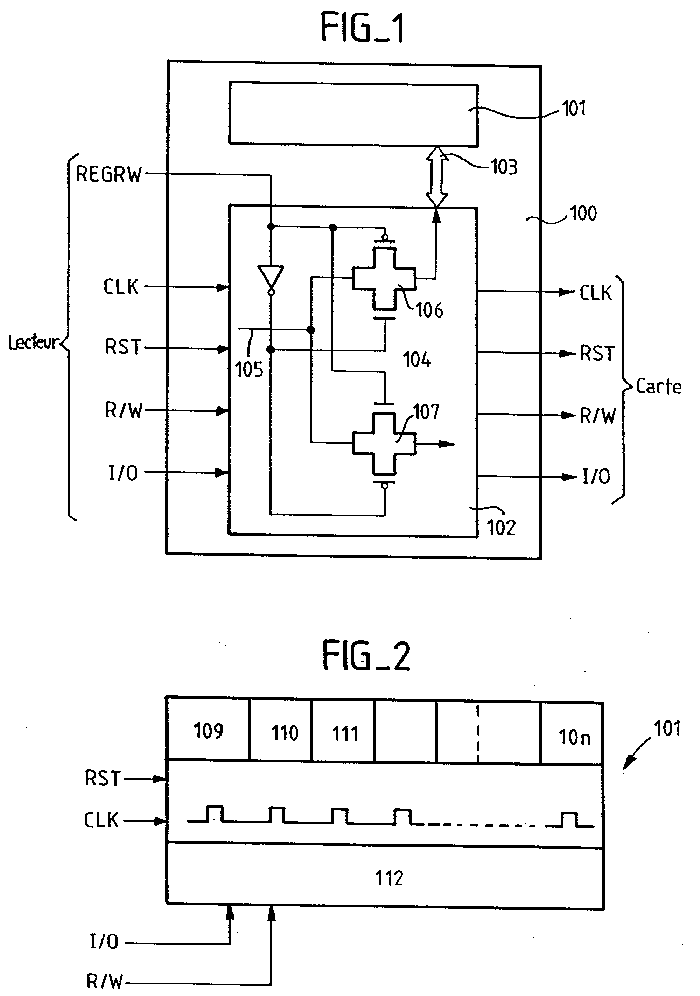

La représentation du circuit d'interface 100 de la figure 1 est limitée aux moyens propres à l'invention pour la clarté de la description. Il comprend bien entendu par ailleurs tous les organes nécessaires à son fonctionnement et à l'adaptation de la carte à puce.au lecteur. Le fonctionnement de ces organes connus est contrôlé par des registres de contrôle, regroupés en un seul registre 101 sur la figure. La gestion du circuit spécialisé consiste donc à lire le contenu de ces registres, par exemple pour vérifier la qualité d'une tension effective qui y a été inscrite au cours d'un test d'alimentation. Elle consiste également à inscrire certains étages du registre, par exemple-pour programmer la valeur de cette même tension. Dans les étages du registre on inscrit des mots de contrôle. Dans une version courante d'utilisation, à chaque étage ne correspond que un bit: le mot de contrôle est alors un mot de un bit.

En outre, le circuit spécialisé doit communiquer avec la carte à puce par l'intermédiaire de huit connexions normalisées. On n'a représenté sur la figure que les connexions d'horloge CLK, de déclenchement RST (remise à zéro), de conditionnement en lecture ou écriture R/W, et d'entrée/sortie série (I/O) qui sont concernées par l'invention. Les autres connexions, non représentées, sont exploitées de manière connue.

Selon l'invention, le circuit 100 communique côté lecteur avec le système informatique de celui-ci par un nombre restreint de connexions comportant quelques connexions connues, non représentées, telles que par exemple une connexion d'alimentation et un groupe de cinq connexions comportant un sous-ensemble de quatre connexions CLK, RST, R/W, I/O identiques à celles vues plus haut, plus une cinquième connexion REGWR de sélection de ces quatre connexions.

Les quatre connexions identiques sont connectées aux entrées d'un commutateur quadruple 102 qui permet de les diriger ensemble, respectivement soit vers les quatre connexions correspondantes de la carte, soit vers le registre de contrôle 101 via une liaison interne 103. Le terme entrée doit être compris au sens large pour permettre une liaison bidirectionnelle quand c'est nécessaire (cas de la connexion écriture/lecture I/O par exemple). Ce commutateur 102 et la liaison 103 peuvent être réalisés de toutes les manières connues dans l'art et comprendre par exemple quatre interrupteurs 104, ou divers systèmes de multiplexage.

L'interrupteur 104 comporte dans son principe une entrée 105 reliée à deux couples 106 et 107 de transistors complémentaires N et P montés en parallèle. Les transistors de ces couples reçoivent respectivement sur leur grille de commande les signaux disponibles sur la connexion REGW ainsi que les signaux complémentaires de ces signaux au moyen d'un inverseur logique 108. Selon la nature du signal disponible sur la connexion REGW les connexions CLK RST I/O et R/W du lecteur sont reliées à la carte ou au registre de contrôle 101.

Pour contrôler cette commutation, le commutateur 102 reçoit sur une entrée de commande la connexion REGWR qui permet donc d'orienter les signaux du lecteur soit vers la carte, soit vers le registre 101.

En fonctionnement normal permanent, lorsque la carte est dans le lecteur, le circuit 100 est donc transparent et les signaux provenant du système informatique du lecteur sont donc appliqués directement à la carte, en traversant le circuit sans aucun changement autre qu'éventuellement un retard d'horloge.

Quand par contre le système informatique du lecteur doit contrôler le fonctionnement du circuit 100 par l'intermédiaire du registre de contrôle 101, par exemple au moment de l'introduction ou du retrait de la carte dans le lecteur, ce système informatique commande par la connexion REGWR le basculement du commutateur 102, ce qui oriente les signaux des quatre autres connexions vers le registre 101. Le système informatique peut alors lire et/ou écrire ce registre 101 en utilisant un logiciel d'interface identique à celui qui lui permet de lire et/ou d'écrire dans la mémoire de la carte à puce. Ce logiciel est déjà disponible puisque, ou bien la carte à puce est de type asynchrone et ce logiciel est connu pour toutes les cartes de ce type,-ou bien elle de type synchrone et dans ce cas ce logiciel est déjà connu lors de l'échange avec la carte: il n'y a pas à en concevoir un troisième.

Sur la figure 2 on a représenté le registre de contrôle 101, muni de ses différents étages 109 à 10n contenant les mots de contrôle. Ce registre est adressé, comme une mémoire de carte à puce de type synchrone, en choisissant avec les ordres disponibles sur les connexions RST et CLK un étage à lire ou dans lequel il faut écrire. Une fois cet étage choisi, le registre comporte un automatisme pour écrire dans un étage tampon 112 le contenu de ce qui est lu dans l'étage adressé, ou pour écrire dans l'étage adressé une information identique à celle chargée depuis le lecteur dans l'étage tampon 112. Le choix entre ces deux opérations est dépendant de l'état d'un signal disponible sur la connexion R/W.

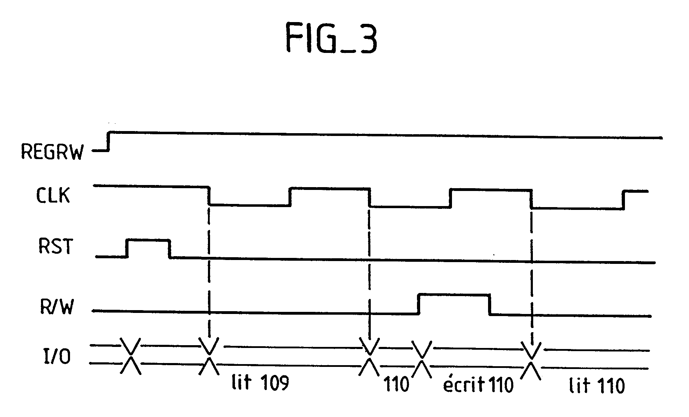

On a représenté sur la figure 3 une séquence où, par exemple, la connexion REGW commute les autres connexions vers le registre 101 en passant à un niveau haut. Après une remise à zéro par la connexion RST qui passe temporairement à un niveau haut, le système accède successivement à tous les étages du registre 101 par la connexion I/O, au rythme de l'horloge CLK. Au cours de chaque cycle d'horloge le registre est configuré en lecture d'abord, puis éventuellement, en fonction de l'ordre disponible sur la connexion R/W, en écriture. Ainsi sur la figure on a successivement une lecture de l'étage 109, puis une lecture suivie d'une écriture de l'étage 110 (R/W passe à un niveau haut) et une lecture de cet étage 110 (R/W est revenu à un niveau bas).

L'invention permet donc de limiter le nombre de connexions entre le circuit d'interface spécialisé 100 et le système informatique du lecteur et-d'utiliser -une interface logicielle (ou protocole) unique, entre le système et le circuit, et entre le système et la carte à puce.

## Revendications

1. Circuit d'interface spécialisé pour carte à circuit intégré comportant un premier ensemble de connexions destinées à être connectées à la carte, un deuxième ensemble de connexions destinées à être connectées à un système informatique d'un lecteur de carte, et un registre de contrôle destiné à contrôler le fonctionnement du circuit, caractérisé en ce que le deuxième ensemble de connexions comprend un sous-ensemble de connexions identique au premier ensemble et une connexion de commande de commutation (REGWR), et que le circuit comprend en outre des moyens de commutation (102) permettant ou bien de relier les connexions du sous-ensemble respectivement aux connexions homologues du premier ensemble, ou bien de relier les connexions du sous-ensemble au registre de contrôle (101), sous l'action de la connexion de commande.

2. Circuit selon les revendication 1, caractérisé en ce que le registre de contrôle (101) est organisé pour pouvoir être écrit et/ou lu par l'intermédiaire des connexions du sous-ensemble depuis le système informatique du lecteur avec une interface logicielle identique à celle d'écriture/lecture d'une carte à puce de type synchrone.

3. Circuit selon l'une quelconque des revendications 1 ou 2, caractérisé en ce que les connexions du premier ensemble et les connexions du sous-ensemble comprennent une connexion d'horloge (CLK), une connexion de remise à zéro (RST), une connexion de configuration en lecture ou en écriture (R/W), et une connexion d'entrée sortie (I/O).
